Europäisches Patentamt

European Patent Office

Office européen des brevets

(11) Publication number : **0 482 680 A1**

# EUROPEAN PATENT APPLICATION

(21) Application number : **91200419.9**

(22) Date of filing : **27.02.91**

(51) Int. Cl.⁵ : **H05B 37/02, H02J 13/00**

(43) Date of publication of application :
**29.04.92 Bulletin 92/18**

(84) Designated Contracting States :
**AT BE CH DE DK ES FR GB GR IT LI LU NL SE**

(71) Applicant : **N.V. Philips' Gloeilampenfabrieken**
**Groenewoudseweg 1**
**NL-5621 BA Eindhoven (NL)**

(72) Inventor : **Raterink, Henk Willem Elbert**
**c/o INT. OCTROOIBUREAU B.V. Prof.**
**Holstlaan 6**
**NL-5656 AA Eindhoven (NL)**

(74) Representative : **Schouten, Marcus Maria et al**
**Internationaal Octrooibureau B.V., Prof.**
**Holstlaan 6**
**NL-5656 AA Eindhoven (NL)**

(54) Programmable illumination system.

(57)    Illumination system for providing a number of different illumination modes and comprising a plurality of programmable illumination units.

A space is illuminated by a plurality of illumination units, each of which can be set at various light output levels. Different tasks, for example reading/writing, meeting or wording with a VDU, are to be performed in the space and each one may require a different illumination mode, *i.e.* the setting of the light output levels of the units. Each unit is provided with a programmable controller having stored in it a table associating a light output level for each illumination mode. Initialization and restoration of the tables in the programmable controllers is performed by a special programming device. The programming device emits sequences of signals for changing the light output levels and storing them as belonging to one of the illumination modes. The programming device may contain a memory in which a number of sets of illumination modes, for different spaces and persons, can be stored.

FIG.2

EP 0 482 680 A1

The invention relates to an illumination system for providing a number of different illumination modes and comprising a plurality of illumination units being adjustable to a number of light output levels, each of said illumination units comprising a programmable controller for adjusting its light output level to a level associated with a selected one of said different illumination modes, the programmable controller being provided with an identification address. Such an illumination system is of particular use in a space, such as a living room, office, factory or shop, in which various tasks are to be performed whereby each of the tasks requires a different way for illuminating the space. A task is to be understood to include the passive presence of a person or object whereby a certain illumination is desirable creating an ambience. In the framework of the present application an illumination unit is to be understood as a single lamp or as a group of lamps coupled to one controller and generating light simultaneously. An illumination mode is defined as a particular setting of the light output levels of all illumination units thereby creating an optimum illumination level for a particular task or ambience. The light output level of a unit may comprise colour and direction of light as well as intensity.

An illumination system as described above is commercially available as the Philips MCS-100 system. With this system it is possible, via control signals, to adjust the light output level of each illumination unit to a desirable level and to store the levels of all units in a memory included in each of the controllers. The MCS-100 system allows for each illumination unit to store two levels as two different illumination modes. The levels can be retrieved by activating one of the illumination modes which activation causes all units to be adjusted to the light output level stored under that illumination mode.

Normally a person in a space to be illuminated, being for example a working environment such as a factory, shop, bank or office, or a domestic environment as a living room, is not an illumination expert. This means that, with the above described MCS-100 system the adjustment of the illumination units by setting the light output levels according to the person's own judgement will often not result in an illumination level that is the most suitable or desirable one for the activities that are to be performed in the space. Nevertheless, the user of such an illumination system wants to have easy control over the illumination in the space and wants to be able to change individual illumination units according to his personal preference.

Therefor, especially in a space with a number of independent adjustable illumination units, which all contribute to the illumination level in the whole space, initialisation of the light levels to a satisfactory adjustment in the different illumination modes will be difficult and take a long time. Also, when the memory contents in the units are lost, for example due to a power failure, replacement of a defective controller, or because of repeatedly changing individual light output levels by a person not normally using the space, it will be difficult and time-consuming to readjust the light output levels of all units.

It is, *inter alia*, an object of the present invention to provide an illumination system according to the introductory paragraph, suitable for application in a working or living environment, which system combines ease of use for the actual occupant and a maximum of flexibility in adjustments with a reliable and relative fast initialisation or restoration of the light output levels of the different illumination modes.

An illumination system according to the invention is characterized in that the system comprises a programming device for transmitting programming signals to the programmable controller of said illumination units for storing in a memory of said controller predetermined light output levels associated with illumination modes. By activating the programming device the light output levels stored in the illumination units are set to predetermined values previously entered in the programming device. Loss of information in the units, either by replacing the controller, by repeatedly changing individual light output levels or by a power failure or a similar accident can be restored quickly with such a device.

A first embodiment of the illumination system according to the invention is characterized in that the programming device comprises means for transmitting to illumination units with a given identification address programming signals for adjusting these units to a predetermined light output level and for storing said predetermined light output level as being associated with one of the illumination modes. Signals comprising the address information, in combination with the simultaneous transmission to all illumination units makes it unnecessary to ensure that the sequence of illumination mode(s) and light output level(s) reaches exclusively the units for which the sequence is intended, but nevertheless changes the light output levels of those units only. Programming can be done for one identification address and one illumination mode at a time so that an operator, performing the programming operation, will be able to check visually the light output level of each unit and correct it if necessary prior to storing the light output level in the controller of the unit.

A second embodiment of the illumination system according to the invention is characterized in that the programming device comprises means for transmitting to all illumination units a programming sequence comprising light output level information and address information for adjusting all illumination units to a predetermined respective light output level, the programming sequence comprising an additional control signal for storing said predetermined light output levels as being associated with one of the illumination modes. Following this sequence, all units are brought, virtually simultaneously, to the light output levels for one particular illumination mode.

The light output levels are subsequently stored in the controllers. In this way programming is faster, and the total effect of all illumination units together on the illumination of the space is directly visible. In an actual realized embodiment both possibilities of programming can be combined in one and the same programming device, allowing an operator to choose his preferred way of programming.

A further embodiment of the invention is characterized in that the programming device comprises a memory for storing and retaining therein a plurality of sets of illumination modes. In this system an illumination mode that is stored in the memory of the programming device is retrieved easily for later use, for example for restoration. Several sets of illumination modes are then possible. For example a "test" set, entered by the manufacturer of the system and to be used by installer or maintenance personnel for test purposes, an "expert" set, which contains the light output level values as advised by an illumination expert for this particular space, and one or more "personal" sets entered by the normal occupant(s) of the space in accordance with his or their personal preference(s). Such a "personal" set may be derived from the "expert" set or from another person's "personal" set. To be able to do so, the programming device may comprise means to store a complete set of illumination modes as an additional set in its memory without removing a previously stored set of illumination modes.

An embodiment of the illumination system according to the invention, is characterized in that the controllers of the illumination units are arranged to adjust the light output level to one of a plurality of discrete steps, and wherein the programming device is arranged to transmit a programming sequence comprising, in this order,

- signals for setting illumination units with a given identification address at maximum or minimum light output level;
- a signal for increasing or decreasing with one step the light output level of illumination units with a given identification address which signal is present as many times as the difference in steps between the maximum or minimum light output level and the predetermined light output level;
- a signal for activating the programmable controller of each illumination unit to store the present light output level as being associated with an illumination mode.

In such an illumination system only a limited number of signals is necessary for programming the illumination units. Inside the illumination unit a fixed relation between step number and actual light output level as a fraction of maximum output level can be implemented.

An advantageous embodiment is characterized in that the signals from the control device and/or the programming device are transmitted to the illumination units by means of wireless transmission, preferably by infrared transmission. No wiring is required, alleviating the installation of the illumination units. Also the program device can be used and kept at any place inside the space. Infrared transmission of signals is a well known technique and will not disturb illumination units in other separated spaces of the same building.

A further embodiment the illumination system according to the invention is characterized in that the system comprises a plurality of groups of illumination units, the controllers of each group being sensitive to a particular set of control and programming signals for that group only and not being sensitive to control and programming signals for the other groups. Different groups of illumination units can be placed in different portions of the same space, for example a large office space with several workers. Control signals for one group will not influence the units of the other groups.

The invention also relates to a programming device for use with an illumination system according to the invention. An embodiment of such a programming device comprises

- means for entering values for selecting a group and an address of illumination units, an illumination mode and a light output level;
- means for transmitting programming sequences comprising said values;
- means for transmitting a further signal for activating the programmable controller of each illumination unit to store the present light output level as associated with one of the illumination modes.

This programming device allows the operator to adjust the units with a given identification address and see the result immediately, before turning to the units with the next identification address.

Another embodiment of a programming device comprises

- a non-volatile memory loaded with a table containing address values and associated illumination mode and light output level values;
- means for transmitting programming sequences comprising said values;
- means for transmitting a further signal for activating the programmable controller of each illumination unit to store the light output level as associated with the illumination modes.

This allows a predetermined set of light output levels for one or all illumination modes to be transmitted simultaneously to the whole system. This is the preferred option when a fast programming has to be done. A suitable non-volatile memory to store the light output level values is an EEPROM. A practical realization of such a programming device might comprise both modes of programming simultaneously.

The programming device might further comprising memory means for storing several tables of address values and associated illumination mode and light output level values, and comprising means for selecting one of said tables prior to transmitting programming sequences. Such device may be used to store a plurality of sets of illumination modes and has the possibility to add additional sets, for example a set derived from an existing one. In such a case the programming procedure requires merely the selection of a particular set before starting the transmission of the programming sequences.

According to the invention the full process of programming consists of the following steps
– selecting the desired illumination modes;
– identifying the configuration of illumination units;
– determining for each of the illumination units the required light output level for each of the illumination modes;
– entering and storing into a programming device a table of values with identification addresses, a number of illumination modes and a corresponding number of associated light output levels;
– generating programming sequences and transmitting said programming sequences for storing in illumination units the illumination modes and associated light output levels.
The various steps need not to be executed immediately one after the other.

The set of predetermined light output levels can be provided by an illumination expert, who may use, for example, a computer simulation of the space to be illuminated. In such process the desired illumination levels at the various places in the space have to be identified for each of the tasks to be performed. Also the configuration of the available illumination units has to be determined, which configuration comprises the possible position of each unit together with the way and possible directions it spreads light into the space. Further parameters such as the size of the space and the reflectance of surfaces such as walls, ceiling and furniture such as tables are to be determined. From this input an optimum setting of the light output level and direction of each of the illumination units is derived, which setting is entered, by hand or otherwise, in the programming device. Subsequently values representing the light output levels are transmitted to the illumination units.

These and other, more detailed, aspects of the invention will be apparent from and elucidated with reference to the drawings and embodiments described hereinafter.

The drawings show in
Figure 1 the lay-out of an office space comprising a working desk, a visual display unit, a conference table and a number of illumination units;
Figure 2 diagrammatically an illumination unit with its controller and a control device;
Figure 3 diagrammatically a programming device;
Figure 4 possible programming sequences for sending programming signals to the illumination units for a first method of programming;
Figure 5 possible programming sequences for sending programming signals to the illumination units for a second method of programming;
Figure 6 the lay-out of a space provided with two groups of illumination units.

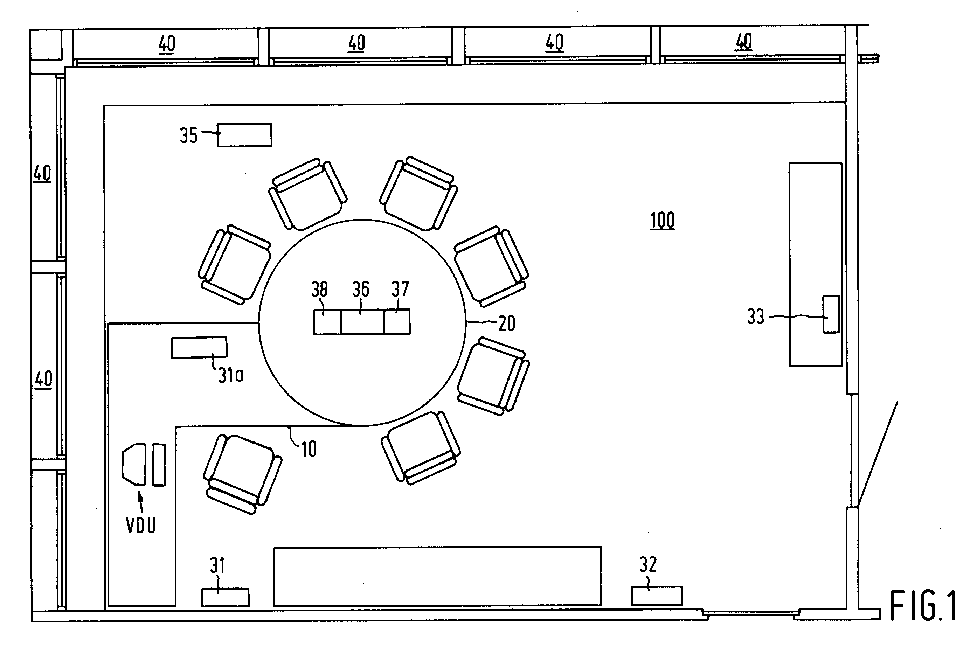

In Figure 1 an office space 100 is shown. The office contains a writing-desk 10 containing equipment such as a computer terminal or personal computer having a visual display unit (VDU) 11, a conference table 20 and a number of illumination units. The illumination units are a desk-lamp 31 on the writing desk, three wall mounted lamps 32, 33 and 34, a free standing lamp 35, and a suspension luminaire above the conference table with a lamp 36 directed upwards for indirect illumination and two lamps 37 and 38 directed downwards for direct illumination of the table. The suspension luminaire has two illumination units, one being the lamp 36 and one consisting of the lamps 37 and 38, all other lamps are separate illumination units. The office has windows 40, at its sides, and contains further doors, cabinets, chairs and other furniture. The ensemble of lamps, including the required control equipment forms the illumination system.

The tasks being performed in an office like this are, for example, reading/writing at the writing-desk 10, working with the VDU 11, and discussing around the conference table 20. Each of these tasks pose different requirements to the way the office is illuminated. There should be a moderate illumination level in the whole space while for reading/writing the desk 10 has to be sufficiently brightly illuminated, for working with the VDU 11 there should be no reflections in the screen visible while a moderate illumination of the desk 10 is acceptable. For conferencing the area with the conference table 20 requires most illumination and possibly a section of the wall with a writing board. Further for a task like cleaning or maintenance a high illumination level is required throughout the space. Different light output levels of the lamps may be desirable in the presence or absence of daylight.

Each of the illuminations modes corresponds to a particular light output level for each of the illumination units. The units are provided with an identification address and so are grouped in a limited number of sets. Light output levels are identified by a step number and all units with the same identification address are switched to the same step number in each illumination mode. According to the invention each unit comprises a programmable memory in which, for each illumination mode the step number or relative light output level for that mode is stored. When a different illumination mode is required a control signal is transmitted from a control device to all units, switching the units to the step number or light output level of the desired illumination mode. A possible example for the assignment of light output levels is given in the following table 1. The values entered in the table may be though of as a percentage of the maximum light output level, but are actually only labels assigned to steps.

## Table 1

| Illumination unit | Address | Mode 1 Reading | Mode 2 VDU | Mode 3 Meeting | Mode 4 Cleaning |
|---|---|---|---|---|---|
| Desk-lamp 31 | A1 | max | 0 | 0 | 0 |
| Wall mounted 32, 33, 34 | A2 | max | 40 | 40 | max |
| Free standing 35 | A3 | 80 | 40 | 40 | max |
| Suspended indirect 36 | A4 | 40 | 0 | max | max |
| Suspended direct 37, 38 | A5 | 0 | 0 | max | 60 |

For other spaces similar considerations can be made. A living room, for example, may contain a dining table at one place, comfortable chairs at another and entertainment equipment such as a piano, television set, stereo set etcetera. Such a place poses different requirements for illumination when dining, reading, watching television, playing the piano or listening recorded music. Also in a workshop the optimum illumination will be different for tasks such as installation and maintenance of equipment, doing normal production, cleaning, and security at times that the workshop is not operational.

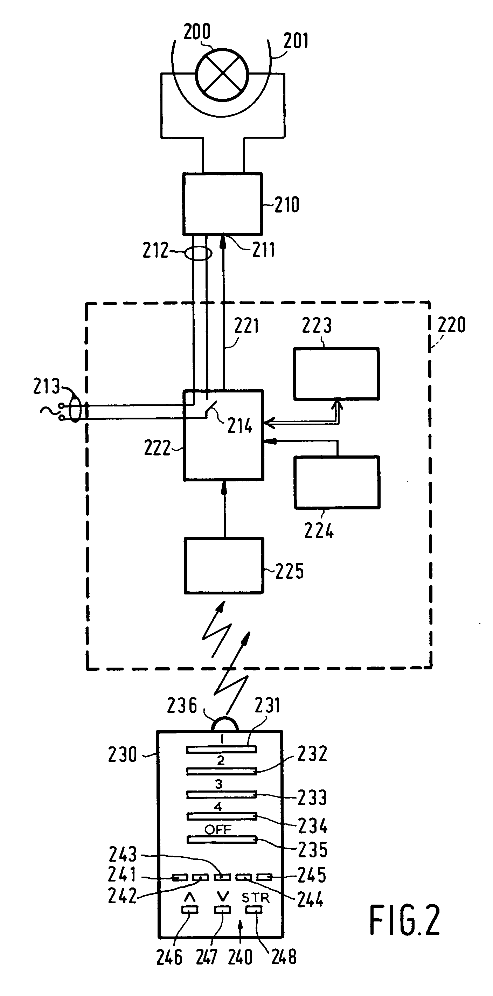

Figure 2 shows diagrammatically an illumination unit. The unit comprises a lamp or a plurality of lamps 200, which may be enclosed in a luminaire 201. The lamp is powered by a power supply, gear or ballast 210 which is adjustable to provide a different amount of power to the lamp, in response to a control signal, for example in the form of a voltage, that is supplied to a control input 211. The power supply comprises a power entrance 212 for connection to the mains 213. Such a power supply is commercially available, for example from the MCS-range of Philips Lighting. The control input 211 of the power supply 210 is connected to an control output 221 of a controller 220. Also the connection between the power supply 210 and the mains 213 goes via the controller which is provided with a power switch 214. The controller may be build around a control circuit 222, for example a microprocessor from the Intel MCS®-51 family. The controller further comprises a programmable memory 223 and a multipolar switch 224 to set an address in the controller. The controller 220 comprises also a receiver 225 for receiving and decoding control and programming signals from a control device 230 or from a programming device. The controller may be powered from the mains or may comprise a battery as its normal power source. A battery is anyway preferred as a back-up source to avoid loss of the contents of the programmable memory 223 when a mains power failure occurs.

In a particular embodiment the power supply can provide sixteen different steps of light output levels, labelled 0 to 15. The level 0 is OFF and the level 15 is maximum light output. The steps can be implemented in the power supply 210 or, if the power supply allows a continuous change of light output or a change in very small intervals, a translation from steps to light output levels can be implemented in the control circuit 222. The steps can be linear, meaning that the light power for each step is changed with a certain percentage, or can be made logarithmically, *i.e.* to correspond to a constant interval in brightness as perceived by the user. An assignment of light output levels for an illumination unit with sixteen steps (numbered 0 to 15) is given in table 2. Also these levels can be considered as percentages of the maximum output level but are actually step labels.

## Table 2

| step | level | step | level |
|------|-------|------|-------|
| 0 | 0 | 8 | 55 |
| 1 | 10 | 9 | 60 |
| 2 | 15 | 10 | 70 |
| 3 | 20 | 11 | 75 |
| 4 | 30 | 12 | 80 |
| 5 | 35 | 13 | 90 |
| 6 | 40 | 14. | 95 |
| 7 | 50 | 15 | MAX |

Communication between the control and programming devices may occur via a physically existing control connection, for example by sending control signals via the mains power lines or other wires, but preferably a wireless method for sending signals is used. This avoids a number of switches to be fixed at various places in the office, and reduces the amount of work for installing or modifying the system considerably. For transmitting signals radio or ultrasone signals can be used, but infra-red signals are preferred.

The control device 230 comprises one or a plurality of transmitters 236 to be able to transmit signals strong enough to be detected by the receiver of each controller. In the shown embodiment it further comprises four buttons 231 to 234 for causing the control device to emit control signals corresponding to one of the illumination modes 1 to 4 and a fifth button 235 to switch off all lights.

In a second key pad 240, for example arranged below a removable cover, an additional set of buttons is provided. These are five buttons 241 to 245 setting the address of the unit(s) to which a control sequence is to be transmitted. The second key pad further comprises an increase button 246 and a decrease button 247. The activation of one of these buttons causes a control sequence to be transmitted containing the address of the simultaneously or last pressed address button and an increase or decrease signal respectively. The address and the increase or decrease signal may be combined in a single code. An illumination unit receiving such a sequence will check if its identification address is the same as the address contained in the control sequence and, if so, change the control signal to the input 211 of the power supply 210 in order to increase or decrease the light output level.

The second key pad also may comprise a store button 248. The activation of this button will cause the control device to transmit a signal to all illumination units, to store in the memory 223 the present light output level as the light output level corresponding to the present illumination mode. In this way the illumination system, after initialization, is controlled by exception, *i. e.* only those illumination units are changed of which the light output level is unsatisfactory, all other light output levels are untouched.

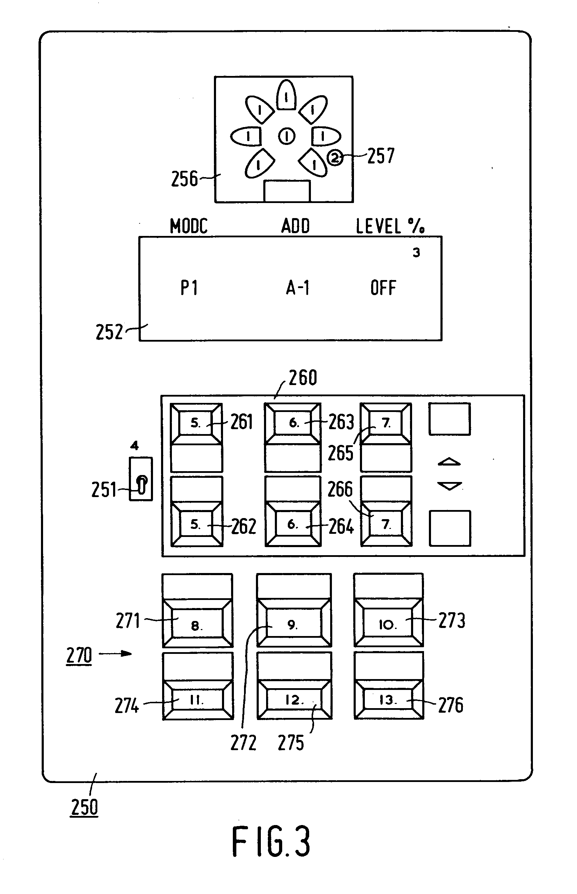

An example for a programming device for initialisation and restoration purposes is shown in figure 3. The programming device 250 comprises a set 256 of infra-red light emitting diodes (IR-LED) directed in various directions to provide enough intensity in the transmitted infra-red signals to ensure proper receipt by all illumination units. A LED 257 emitting visible light, is arranged electrically in parallel with the IR-LED's so that the operation of the LED's can be checked. The device comprises an ON-OFF button 251, and a first key-pad 260 with keys 261 and 262 for entering a value identifying the illumination mode, keys 263 and 264 for adjusting the address number and keys 265 and 266 for the light output level. In this embodiment every time a key is pressed the value is incremented or decremented with one step. A numerical key pad for entering numerical values could be used as well but that would require a larger number of keys and a larger chance for making errors. A window 252, for example an LCD, is provided to show the current settings of the illumination mode number, the address and the light value. The latter can be displayed as a step number or as a fraction of the maximum intensity.

There is also a second key-pad 270 with keys 271 to 276 for sending programming sequences to the illumination units. These keys have the following functions. Activation of key 271, the "mode" key, causes a signal to be send to set all illumination units for switching to the illumination mode currently entered in the programming device. Key 272, the "lightlevel" key sets the illumination units with the currently selected address to the light output level currently contained in the programming device. Key 273 "store and set mode", causes each unit to store its present light output level as the value for the illumination mode currently set with the programming device. Activation of key 274, "store", causes only to store the illumination value but does not transmit a value indicating an illumination mode. The "off" key 275 just switches all luminaires off. The "all" key 276 combines the functions of the "mode", "store" and "lightlevel" keys and will load the current light output level value under the current illumination mode in the illumination unit(s) with the current identification address, the current values being the values displayed in the window 252.

Setting a light output level can be done, for, example, by switching the unit(s) off, and sending a number of identical increase commands whereby each command increases the light output level with one step till the required level is reached.

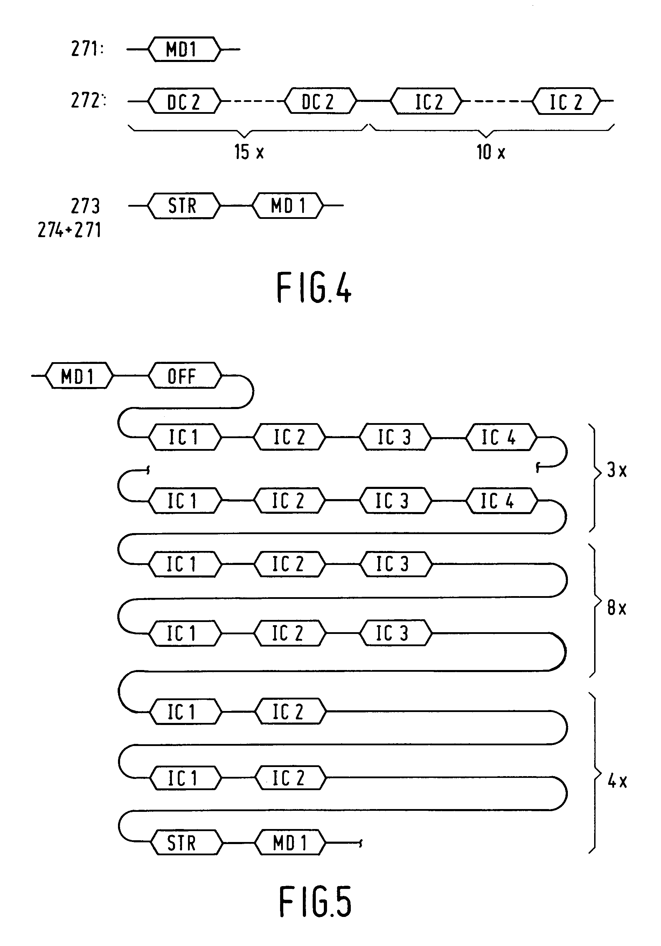

In figure 4 programming sequences for each of these programming steps are shown. As signals can be specific for units with a given address, there is no need to send explicitly an address signal. A number of different signals is necessary. In the above embodiment with five addresses and four modes, four signals, MD1, MD2, MD3 and MD4 are transmitted to change to the respective mode. One signal OFF switches off all illumination units, one signal STR is needed to store the light output levels, five signals IC1, IC2, IC3, IC4 and IC5 are necessary for increasing the current light output levels with one step, and another five, DC1, DC2, DC3, DC4 and DC5, for decreasing with one step.

In the first row of Figure 4, the signal MD1 for switching all units to the first illumination mode is shown, i. e. activation of key 271 from figure 3. The second row shows the sequence to switch the units with identification address 2 to step number 10 or a light output level of 75 in the setting of table 2. To ascertain that the unit is off, fifteen decrease signals DC1 are transmitted, followed by ten increase signals IC1 to reach the "75" level. The third row shows the store signal STR followed by, again, a mode signal MD1 to store the present light level as mode 1. This is achieved by activating buttons 274 and 271, or activating button 273 alone. The full sequence can also be transmitted by activating key 276.

A second way of programming consists of repeatedly sending to each unit in turn one increase signal till the desired light output level is reached. This is illustrated in figure 5. Firstly a mode signal MD1 is transmitted, followed by an OFF signal to switch all units to the zero level. Secondly, fifteen sequences in total of increase signals IC1, .., IC5 are transmitted. The shown sequence is for the programming of mode 1 as shown in the table 1 above. A specific increase signal is only present as long as the desired light output level in the corresponding unit(s) is not reached. As the unit with address 5 is off completely, no IC5 signals are transmitted, and because only the units with addresses 1 and 2 are to reach the maximum level, signals IC1 and IC2 are the only ones present 15 times. The sequence is terminated by a STR and a MD1 signal to store the light output levels as illumination mode 1.

This mode of programming is preferably used in a programming device in which all predetermined light output levels for all illumination units are stored, for example in a non-volatile memory such as an EEPROM. These data can be obtained by a computer simulation of the space, taking into account the known optimum light output levels at table and desk tops, walls, the reflectivity of all surfaces, the position of the illumination units, etcetera. Such a programming device could have only a few buttons, for selecting the illumination mode and optionally for selecting a space when modes for several spaces can be stored in the EEPROM. Alternatively or in addition to different spaces a programming device with a sufficiently large memory can be used to store several sets of illumination modes for the same space. Possibilities for different sets are a "test" set, entered by the manufacturer of the system and to be used by the installer or by maintenance personnel for test purposes, an "expert" set, which contains the light output level values as advised by an illumination expert for this particular space, and one or more "personal" sets entered by the normal occupant(s) of the space in accordance with his or their personal preference(s). Such a "personal" set may be derived from the "expert" set or from another person's "personal" set.

An even faster mode of programming can be obtained when the programming sequence contains signals for transmitting step numbers or light output level values. In that case a set of illumination units can be programmed by transmitting sequences containing an identification address, a step number value and an illumination mode value. As in the above described sequences, the address and the step number can be transmitted as a single coded signal.

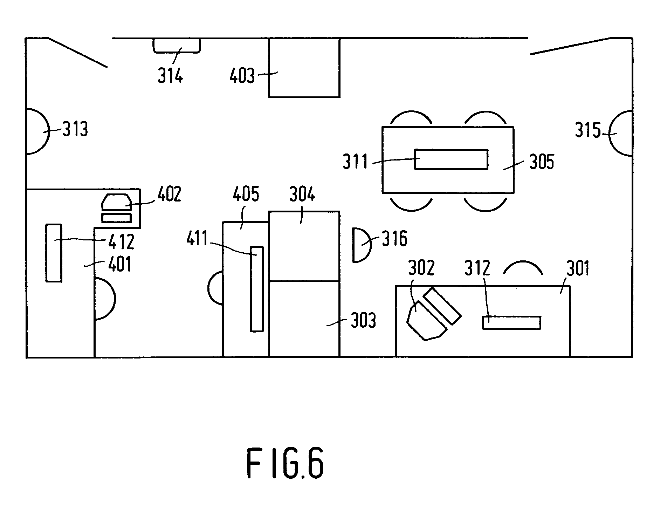

Figure 6 shows a space having room for several occupants, each one having its own illumination system. Such a space is for example a large office space for several workers, in a living environment one could imagine a living room annex kitchen. In the figure two desks 301 and 401 are shown, visual display units 302 and 402, cabinets 303, 304 and 403, a conference table 305 and a wording bench 405, for example for experimentations. Two occupants can use this space simultaneously, and adjust the light output level to their individual needs. illumination units in the portion of the space for the first occupant are, for example, a suspended unit 311 above the conference table 305, a desk lamp 312 on desk 301, a free standing lamp 313 and a wall mounted lamp 314. The second occupant has a suspended lamp 411 above the wording bench, a desk lamp 412 on his writing desk 401, and wall mounted units 313 and 314.

In order to avoid that a change of illumination mode, or a change in light output level of an individual unit by the one occupant would also change the illumination in the other occupant's area, due to unintended receipt of wireless transmitted signals, the illumination system is divided in two groups. The first group consists of the illumination units 311, 312, 313 and 314 for the first occupant, the second group is formed by the units 411, 412, 413 and 414 in the second occupant's area. Control and programming signals are transmitted and received in different channels for the different groups, such that a signal in one channel will not influence a unit preset to receive in the other channel. A channel may be a separate set of coded signals that have no meaning attached to them for units of the other group. For ultrasonic or radio transmission of signals the different channels can use different frequencies. A channel may also be defined by a way of coding the same sequences in different patterns. In a system which is formed in a way where signals for all units don't exist, but in which each signal carries the address of the unit or units for which it is intended, different groups can be defined merely by the addresses of its units.

Instead of using two groups one can use also a larger number of groups and a correspondingly larger number of channels. Such a system can, for example, be applied in an industrial environment where a large number of machines and/or workers are present in the same space at the same time.

## Claims

1. Illumination system for providing a number of different illumination modes and comprising a plurality of illumination units being adjustable to a number of light output levels, each of said illumination units comprising a programmable controller for adjusting its light output level to a level associated with a selected one of said different illumination modes, the programmable controller being provided with an identification address, characterized in that the system comprises a programming device for transmitting programming signals to the programmable controller of said illumination units for storing in a memory of said controller predetermined light output levels associated with illumination modes.

2. Illumination system according to Claim 1, characterized in that the programming device comprises means for transmitting to illumination units with a given identification address programming signals for adjusting these units to a predetermined light output level and for storing said predetermined light output level as being associated with one of the illumination modes.

3. Illumination system according to Claim 1, characterized in that the programming device comprises means for transmitting to all illumination units a programming sequence comprising light output level information and address information for adjusting all illumination units to a predetermined light output level, the programming sequence comprising an additional control signal for storing said predetermined light output levels as being associated with one of the illumination modes.

4. Illumination system according to preceding Claim 1, 2, or 3, characterized in that the programming device comprises a memory for storing and retaining therein a plurality of sets of illumination modes.

5. Illumination system according to Claim 1, 2, 3 or 4, characterized in that the controller of the illumination units are arranged to adjust the light output level to one of a plurality of discrete steps, and wherein the programming device is arranged to transmit a programming sequence comprising, in this order,
   – signals for setting illumination units with a given identification address at maximum or minimum light output level;

– a signal for increasing or decreasing with one step the light output level of illumination units with a given identification address which signal is present as many times as the difference in steps between the maximum or minimum light output level and the predetermined light output level;

– a signal for activating the programmable controller of each illumination unit to store the present light output level as being associated with an illumination mode.

6. Illumination system according to any of the preceding Claims, characterized in that the signals from the control device and/or the programming device are transmitted to the illumination units by means of wireless transmission, preferably by infrared transmission.

7. Illumination system according to any one of the preceding Claims, characterized in that the system comprises a plurality of groups of illumination units, the controllers of each group being sensitive to a particular set of control and programming signals for that group only and not being sensitive to control and programming signals for the other groups.

8. A programming device for use with an illumination system according to any one of the preceding Claims comprising:

– means for entering values for selecting a group and an address of illumination units, an illumination mode and a light output level;

– means for transmitting programming sequences comprising said values;

– means for transmitting a further signal for activating the programmable controller of each illumination unit to store the present light output level as associated with one of the illumination modes.

9. A programming device for use with an illumination system according to any one of the Claims 1 to 7, comprising:

– a non-volatile memory loaded with a table containing address values and associated illumination mode and light output level values;

– means for transmitting programming sequences comprising said values;

– means for transmitting a further signal for activating the programmable controller of each illumination unit to store the light output level as associated with the illumination modes.

10. A programming device according to claim 9, further comprising memory means for storing several tables of address values and associated illumination mode and light output level values, and comprising means for selecting one of said tables prior to transmitting programming sequences.

11. Method for programming an illumination unit of an illumination system according to Claim 1, comprising the following steps:

– selecting the desired illumination modes;

– identifying the configuration of illumination units;

– determining for each of the illumination units the required light output level for each of the illumination modes;

– entering and storing into a programming device a table of values with identification addresses, a number of illumination modes and a corresponding number of associated light output levels;

– generating programming sequences and transmitting said programming sequences for storing in illumination units the illumination modes and associated light output levels.

FIG.1

FIG.2

FIG.3

FIG.4

FIG.5

314  403

313

315

402  405  304  311  305

412  411  316
401  302  312  301

303

FIG.6

EP 0 482 680 A1

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-253 082 (VARI-LITE INC.)<br>* page 5, line 1 - page 7, line 15 *<br>* page 11, line 1 - page 12, line 14; figure 1 *<br>* page 13, line 11 - line 24; figure 2 *<br>* page 15, line 1 - page 16, line 14; figures 3,4 *<br>* page 18, line 1 - line 19; figure 5 *<br>* page 27, line 13 - page 28, line 28 * | 1,2,4,7<br>8,9,11 | H05B37/02<br>H02J13/00 |
| Y | | 6 | |
| Y | DE-A-3 719 384 (SEMPERLUX GMBH)<br>* column 3, line 58 - column 4, line 14; figure 1 *<br>* column 5, line 1 - line 62; figure 9 * | 6 | |
| A | WO-A-8 804 517 (LIGHTOLIER INC.)<br>* page 2, line 22 - page 4, line 26 *<br>* page 6, line 24 - page 8, line 6; figures 1,2 *<br>* page 11, line 12 - page 12, line 2 * | 1-5,7-9 | |
| A | GB-A-2 070 830 (TOSHIBA ELECTRIC EQUIPMENT CORP.) | | TECHNICAL FIELDS SEARCHED (Int. Cl.5) |
| A | FR-A-2 530 839 (RAMANANTSOA JOHNSON) | | H05B |
| A | EP-A-69 470 (PITTWAY CORP.) | | |

The present search report has been drawn up for all claims

| Place of search | Date of completion of the search | Examiner |
|---|---|---|
| THE HAGUE | 11 OCTOBER 1991 | ALBERTSSON E.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)